# EUROPÄISCHE PATENTSCHRIFT

(11) **EP 2 127 570 B1**
(45) Veröffentlichungstag und Bekanntmachung des Hinweises auf die Patenterteilung: **22.02.2012**
(21) Anmeldenummer: 09158348.4
(22) Anmeldetag: 21.04.2009
(51) Int. Cl.: A47J 31/36, A47J 31/46, A47J 31/40

(54) **Vorrichtung zur Zubereitung eines Brühgetränkes**
Device for preparing a brewed drink
Dispositif de préparation d'une boisson chaude

(30) Priorität: 27.05.2008 DE 202008007131 U
(43) Veröffentlichungstag der Anmeldung: 02.12.2009
(73) Patentinhaber: MELITTA HAUSHALTSPRODUKTE GmbH & Co. Kommanditgesellschaft, D-32427 Minden (DE)
(72) Erfinder: Aengenheyster, Dr. Gerald, 32427, Minden (DE); Weinreich, Steffen, 32427, Minden (DE)
(74) Vertreter: Dantz, Jan Henning

(56) Entgegenhaltungen:
- WO-A-2005/120312
- WO-A-2006/135864

## Beschreibung

Die vorliegende Erfindung betrifft eine Vorrichtung zur Zubereitung eines Brühgetränkes, insbesondere Kaffee oder Tee, mit einem Behälter für kaltes Wasser, der über eine Leitung mit einer Pumpe verbunden ist, mittels der das kalte Wasser zu einer Heizeinrichtung und einer Brühkammer förderbar ist.

Es gibt Vorrichtungen zur Zubereitung von Kaffee, bei denen zusätzlich zu dem gebrühten Kaffee eine weitere Komponente, wie Milch oder Zucker, ausgegeben werden kann. Hierfür ist eine zusätzliche Dosiervorrichtung vorgesehen, die eine eigene Pumpe umfasst. Für jede weitere Komponente wird eine eigene Pumpe oder Motor sowie eine Fördereinrichtung vorgesehen, was vergleichsweise aufwendig ist und viel Bauraum erfordert.

Eine ähnliche Vorrichtung ist aus der WO 2006/135864 A2 bekannt.

Es ist daher Aufgabe der vorliegenden Erfindung eine Vorrichtung zur Zubereitung eines Brühgetränkes zu schaffen, die auf einfache Weise eine Dosierung einer zweiter Komponente ermöglicht.

Diese Aufgabe wird mit einer Vorrichtung zur Zubereitung eines Brühgetränkes mit den Merkmalen des Anspruches 1 gelöst.

Erfindungsgemäß kann das in der Heizeinrichtung erhitzte Wasser zur Erhitzung eines ausdehnbaren Mediums in einer Dosiereinrichtung eingesetzt werden, mittels der eine zweite Komponente zu dem Brühgetränk zuführbar ist. Dadurch braucht die Vorrichtung zur Zubereitung des Brühgetränkes nur eine Pumpe und eine Heizeinrichtung, da mittels des heißen Wassers sowohl das Brühen des Brühgetränkes möglich ist als auch die Dosierung mindestens einer weiteren Komponente über die Dosiereinrichtung erfolgt. Es ist nicht notwendig, für die Dosiereinrichtung eine eigene elektromotorisch oder elektromagnetisch angetriebene Pumpe vorzusehen. Dadurch kann der Benutzer auf einfache Weise eine zweite Komponente zu dem Brühgetränk dosieren.

Gemäß einer bevorzugten Ausgestaltung der Erfindung ist ein Verteiler vorgesehen, mittels dem das erhitzte Wasser wahlweise direkt zu der Brühkammer und/oder zu der Dosiereinrichtung geleitet werden kann. Dadurch kann der Benutzer entscheiden, ob eine zweite Komponente zugefügt werden soll. Ferner kann die Menge der Dosierung der zweiten Komponente eingestellt werden, je nachdem wie viel erhitztes Wasser zu der Dosiereinrichtung geleitet wird.

Vorzugsweise umfasst die Dosiereinrichtung ein Gehäuse, in dem das ausdehnbare Medium enthalten ist, wobei ein Kolben verschiebbar und abgedichtet in dem Gehäuse geführt ist. Über den Kolben kann dann eine Kolbenstange und eine mechanische Dosiereinrichtung angetrieben sein, mittels der dann die zweite Komponente zugeführt wird.

Um nach einem Brühvorgang und dem Dosieren einer zweiten Komponente die Dosiervorrichtung schnell zu regenerieren, kann mittels der Pumpe kaltes Wasser zum Kühlen der Dosiereinrichtung zugeführt werden. Eine Rückstellung des ausdehnbaren Mediums durch Kühlen mit Kaltwasser besitzt den Vorteil, dass in kurzer Zeit ein weiterer Brühvorgang vorgenommen werden kann. Meist muss für den nachfolgenden Brühvorgang eine kurze Zeit für eine Zwischenheizphase gewartet werden, in der die Heizeinrichtung auf die für die nächste Brühung erforderliche Ausgangstemperatur erhitzt wird. Diese Zeit kann dann zur Regenerierung der Dosiereinrichtung genutzt werden, so dass sich die Zeit zwischen den Brühvorgängen nicht verlängert.

Gemäß einer weiteren Ausgestaltung der Erfindung ist das Brühgetränk nach der Brühkammer in einem Auslass ausgebbar und die Dosiereinrichtung gibt in einem eigenen Auslass die zweite Komponente aus. Dadurch wird die Ausgabe der zweiten Komponente auch für den Benutzer sichtbar, der seine Tasse unter den beiden Auslässen abstellt. Alternativ ist es möglich, dass die zweite Komponente unmittelbar in eine Leitung eingeleitet wird, in der das fertige Brühgetränk zu dem Auslass geleitet wird.

Gemäß einer bevorzugten Ausgestaltung der Erfindung ist das ausdehnbare Medium aus schmelzbarem Wachs gebildet, wobei das Wachs beim Erhitzen verflüssigt wird, wobei eine erhebliche Volumenausdehnung stattfindet. Das schmelzbare Wachs hat dabei eine Schmelztemperatur oberhalb der Umgebungstemperatur, insbesondere zwischen 25°C und 80°C, vorzugsweise 30°C bis 70°C, so dass die thermischen Verluste des Brühwassers möglichst gering gehalten werden können.

Vorzugsweise weist die Vorrichtung mehrere Dosiereinrichtungen zum Zuführen unterschiedlicher Komponenten, wie Milch, Zucker oder Süßstoff auf. Dadurch kann bei vergleichsweise kompakter Bauweise die Funktionalität der Vorrichtung erhöht werden, da nicht für jede Komponente eine eigene Pumpe bzw. ein elektromotorischer Antrieb vorgesehen werden muss.

Die Erfindung wird nachfolgend anhand eines Ausführungsbeispieles mit Bezug auf die beigefügte Zeichnung näher erläutert. Es zeigt:

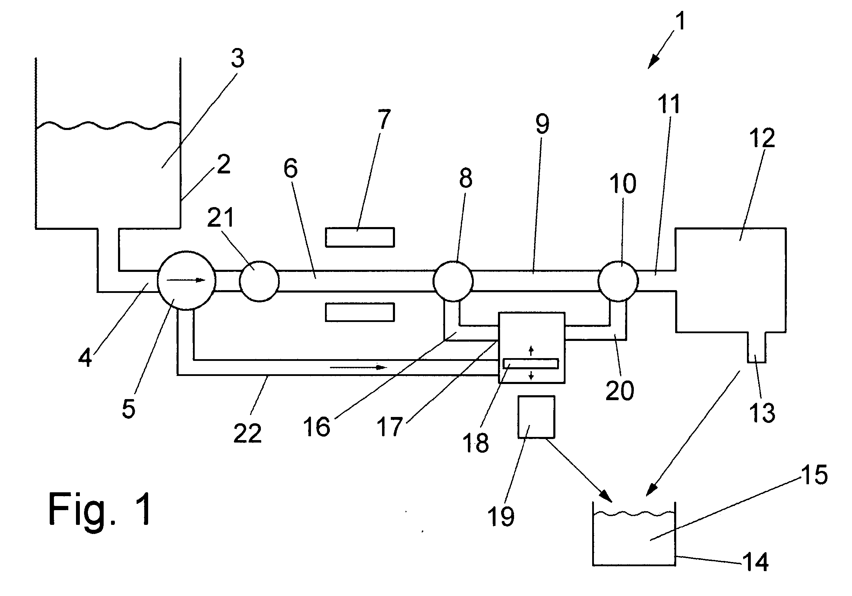

- Figur 1: ein Blockschaltbild einer erfindungsgemäßen Vorrichtung zur Zuberei- tung eines Brühgetränkes.

Eine Vorrichtung 1 zur Zubereitung eines Brühgetränkes umfasst einen Behälter 2, in dem kaltes Wasser 3 einfüllbar ist. Der Behälter 2 kann abnehmbar an der Vorrichtung gehalten sein und ist über eine Leitung 4 mit einer Pumpe 5 verbunden. Die Pumpe 5 fördert das kalte Wasser durch eine Leitung 6, die von einer Heizeinrichtung 7 umgeben ist.

Das in der Heizeinrichtung 7 erhitzte Wasser wird zu einem Verteiler 8 geführt, der über eine Leitung 9 mit einem Verbindungsknoten 10 und dann über eine Leitung 11 mit einer Brühkammer 12 verbunden ist. In der Brühkammer 12 kann Kaffeemehl eingefüllt werden, um Kaffee zu brühen. Die Brühkammer 12 ist mit einem Auslass 13 verbunden, der eine Ableitung des fertigen Brühgetränkes in einen Behälter 14 ermöglicht. Das dort enthaltene Brühgetränkt 15 kann neben dem Kaffee noch mindestens eine weitere Komponente, wie Milch, Zucker oder Süßstoff enthalten.

Zur Dosierung der ein oder mehreren weiteren Komponenten, ist eine Dosiereinrichtung vorgesehen. Die Dosiereinrichtung umfasst ein Gehäuse 17, in dem ein ausdehnbares Medium wie Wachs, enthalten ist. In dem Gehäuse 17 ist ein Kolben 18 verschiebbar geführt, so dass bei einer Ausdehnung des Mediums der Kolben 18 verfahren wird und über eine Kolbenstange auf ein Förderelement 19 einwirkt, in dem die weitere Komponente enthalten ist. Durch die Bewegung des Kolbens 18 kann somit eine weitere Komponente zu dem Brühgetränk 15 dosiert werden.

Falls keine weitere Komponente dosiert werden soll, kann das heiße Wasser einfach über den Verteiler 8 und die Leitungen 9 und 11 zu der Brühkammer 12 geleitet werden. Falls hingegen eine weitere Komponente dosiert werden soll, kann das erhitzte Wasser über den Verteiler 8 ganz oder teilweise zu der Leitung 16 geführt werden, mittels der das Gehäuse 17 der Dosiereinrichtung umspült werden kann. Dadurch wird das ausdehnbare Medium in dem Gehäuse 17 erhitzt und kann somit den Kolben 18 verfahren, so dass eine zweite Komponente über die Fördereinrichtung 19 dem Brühgetränk 15 zugeführt wird. Das heiße Wasser kann hinter dem Gehäuse 17 durch eine Leitung 20 zu dem Knotenpunkt 10 geleitet werden, so dass es anschließend über die Leitung 11 in die Brühkammer 12 gelangen kann. Die geringfügige Abkühlung des heißen Wassers wirkt sich auf die Qualität des Brühvorganges nicht oder nur unmerklich aus.

Nach dem Brühvorgang kann zur Abkühlung des ausdehnbaren Mediums und Rückstellung des Kolbens 18 kaltes Wasser durch die Dosiervorrichtung geleitet werden, das dann zurück in den Wasserbehälter geleitet oder an einem nicht dargestellten Auslass entsorgt wird. Hierfür ist in der Leitung 6 ein Ventil 21 vor der Heizeinrichtung 7 vorgesehen, so dass das Wasser wahlweise durch die Leitung 6 zu der Heizeinrichtung 7 oder durch eine Leitung 22 zu dem Gehäuse 17 der Dosiereinrichtung geleitet werden kann. Dadurch kann das kalte Wasser die Dosiereinrichtung effektiv abkühlen.

Hinsichtlich der Steuerung der Vorrichtung besteht die Möglichkeit, das Ventil 8 elektronisch zu steuern. Je nach durch den Nutzer betätigtem Bedienelement am Gerät wird das Ventil 8 zu der Richtung Dosiereinrichtung geschlossen belassen, während eines Teils der Brühung oder während der kompletten Brühung offen gehalten. Beispielsweise könnte bei stufenloser Einstellung der Menge der zweiten Komponente (z.B. über ein Potentiometer) die zeitliche Steuerung des Ventils über eine Elektronik erfolgen. Es kann somit ein elektronisch gesteuertes UND-VENTIL eingesetzt werden, um gleichzeitig eine Dosierung und einen Brühvorgang auszuführen.

Eine zweite Möglichkeit ist die mechanische Steuerung des Ventils 8. Der Benutzer stellt die gewünschte Menge ein und durch eine Mechanik wird die eingestellte Menge Wasser an dem ausdehnbaren Medium der Dosiereinrichtung vorbeigeleitet. Dies kann durch Veränderung des Gegendrucks in der Leitung oder eine Veränderung des Leitungsquerschnitts erfolgen. Es kann somit auch eine Art manuell gesteuertes UND-VENTIL eingesetzt werden, um Dosierung und Brühvorgang gleichzeitig vorzunehmen.

Es ist aber auch möglich, die Dosierung der zweiten Komponente nicht parallel zur eigentlichen Brühung stattfinden zu lassen, sondern Brühung und Dosierung sequentiell zu steuern. Dies bedeutet, dass das Ventil während dieser Zubereitungsart das Wasser zunächst nur durch die Leitung 9 durchgelassen wird, während die Leitung 16 durch das Verteilerventil 8 geschlossen ist. Nach Abschluss dieser ersten Sequenz (Brühung) folgt eine zweite Sequenz (Dosierung), in der die Leitung 9 geschlossen und die Leitung 16 durch das Verteilerventil 8 geöffnet ist. Auch dies kann selbstverständlich per elektronischer oder manueller Steuerung nach Art einer Oder-Steuerung erfolgen.

In dem dargestellten Ausführungsbeispiel weist die Fördereinrichtung 19 einen eigenen Auslass zur Abgabe der zweiten Komponente in den Behälter 14 auf. Dadurch kann der Benutzer sehen, dass sowohl das Brühgetränk über den Auslass 13 als auch die zweite Komponente zugegeben wird. Es ist auch möglich, den Auslass der Dosiereinrichtung so vorzusehen, dass er in eine Leitung mit dem heißen Brühgetränk mündet, so dass nur ein Auslass für das Brühgetränk mit der weiteren Komponente vorhanden ist.

In dem gezeigten Ausführungsbeispiel ist nur eine Dosiervorrichtung 17, 18 und 19 gezeigt, mittels der eine zweite Komponente dosiert werden kann. Es ist natürlich möglich, mehrere Dosiervorrichtungen vorzusehen, die sämtlich über die Pumpe 5 und die Heizeinrichtung 7 betätigt werden können. Hierfür kann eine entsprechende Steuerung vorgesehen sein, die eine Leitung des heißen Wassers zu den einzelnen Dosiervorrichtungen ermöglicht. Die Dosiervorrichtungen können dabei in Reihe oder parallel geschaltet sein.

## Patentansprüche

1. Vorrichtung (1) zur Zubereitung eines Brühgetränkes, insbesondere Kaffee oder Tee, mit einem Behälter (2) für kaltes Wasser, der über eine Leitung (4) mit einer Pumpe (5) verbunden ist, mittels der das kalte Wasser zu einer Heizeinrichtung (7) und einer Brühkammer (12) förderbar ist, und einer Dosiervorrichtung **dadurch gekennzeichnet, dass** das in der Heizeinrichtung (7) erhitzte Wasser zur Erhitzung eines ausdehnbaren Mediums in der Dosiereinrichtung (17, 18, 19) einsetzbar ist, mittels der eine zweite Komponente zu dem Brühgetränk (15) zuführbar ist.

2. Vorrichtung nach Anspruch 1, **dadurch gekennzeichnet, dass** ein Verteiler (8) vorgesehen ist, mittels dem das erhitzte Wasser wahlweise direkt zu der Brühkammer (12) und/oder zu der Dosiereinrichtung (17, 18; 19) geleitet werden kann.

3. Vorrichtung nach Anspruch 1 oder 2, **dadurch gekennzeichnet, dass** die Dosiereinrichtung ein Gehäuse (17) umfasst, in der ausdehnbare Medium enthalten ist und ein Kolben (18) verschiebbar in dem Gehäuse (17) geführt ist.

4. Vorrichtung nach einem der Ansprüche 1 bis 3, **dadurch gekennzeichnet, dass** mittels der Pumpe (5) kaltes Wasser zum Kühlen der Dosiereinrichtung (17, 18, 19) zuführbar ist.

5. Vorrichtung nach einem der Ansprüche 1 bis 4, **dadurch gekennzeichnet, dass** das Brühgetränk nach der Brühkammer (12) in einem Auslass (13) ausgebbar ist und die Dosiereinrichtung (17, 18, 19) einen eigenen Auslass zur Ausgabe der zweiten Komponente aufweist.

6. Vorrichtung nach einem der Ansprüche 1 bis 4, **dadurch gekennzeichnet, dass** die Dosiereinrichtung (17, 18, 19) die zweite Komponente zu dem Brühgetränk in einer Leitung vor einem Auslass für das Brühgetränk zuführt.

7. Vorrichtung nach einem der Ansprüche 1 bis 6, **dadurch gekennzeichnet, dass** das ausdehnbare Medium aus schmelzbarem Wachs gebildet ist.

8. Vorrichtung nach Anspruch 7, **dadurch gekennzeichnet, dass** das schmelzbare Wachs eine Schmelztemperatur von 25°C bis 80°C, vorzugsweise 30°C bis 70°C aufweist.

9. Vorrichtung nach einem der Ansprüche 1 bis 8, **dadurch gekennzeichnet, dass** die Vorrichtung mehrere Dosiereinrichtungen (17, 18, 19) zum Zuführen unterschiedlicher Komponenten, wie Milch, Zucker, Süßstoff oder dergleichen, aufweist.

10. Vorrichtung nach einem der Ansprüche 1 bis 9, **dadurch gekennzeichnet, dass** eine Steuerung vorgesehen ist, mittels der die Dosierung der zweiten Komponente zeitgleich zu dem Brühvorgang stattfindet.

11. Vorrichtung nach einem der Ansprüche 1 bis 9, **dadurch gekennzeichnet, dass** eine Steuerung vorgesehen ist, mittels der die Dosierung der zweiten Komponente zeitversetzt zu dem Brühvorgang stattfindet.

## Claims

1. Device (1) for preparing a brewed beverage, particularly coffee or tea, comprising a container (2) for cold water, which container is connected by way of a duct (4) with a pump (5) by means of which the cold water can be conveyed to a heating device (7) and a brewing chamber (12), and a metering device, **characterised in that** the water heated in the heating device (7) is usable for heating an expansible medium in the metering device (17, 18, 19), by means of which a second component can be fed to the brewed beverage (15).

2. Device according to claim 1, **characterised in that** a distributor (8) is provided, by means of which the heated water can be selectably conducted directly to the brewing chamber (12) and/or to the metering device (17, 18, 19).

3. Device according to claim 1 or 2, **characterised in that** the metering device comprises a housing (17) in which the expansible medium is contained and a piston (18) is guided in the housing (17) to be displaceable.

4. Device according to any one of claim 1 to 3, **characterised in that** cold water for cooling the metering device (17, 18, 19) can be fed by means of the pump (5).

5. Device according to any one of claims 1 to 4, **characterised in that** the brewed beverage can be dispensed after the brewing chamber (12) in an outlet (13) and the metering device (17, 18, 19) has an own outlet for dispensing the second component.

6. Device according to any one of claims 1 to 4, **characterised in that** the metering device (17, 18, 19) feeds the second component to the brewed beverage in a duct in front of an outlet for the brewed beverage.

7. Device according to any one of claims 1 to 6, **characterised in that** the expansible medium is formed from meltable wax.

8. Device according to claim 7, **characterised in that** the meltable wax has a melting temperature of 25° C to 80° C, preferably 30° C to 70° C.

9. Device according to any one of claims 1 to 8, **characterised in that** the device comprises several metering devices (17, 18, 19) for feeding different components such as milk, sugar, sweetener or the like.

10. Device according to any one of claims 1 to 9, **characterised in that** a control is provided, by means of which the metering of the second component takes place simultaneously with the brewing process.

11. Device according to any one of claims 1 to 9, **characterised in that** a control is provided, by means of which the metering of the second component takes place displaced in time with respect to the brewing process.

## Revendications

1. Dispositif (1) pour la préparation d'une boisson brassée, en particulier de café ou de thé comportant un réservoir d'eau froide (2) qui est relié par l'intermédiaire d'une conduite (4) à une pompe (5) permettant de transférer l'eau froide à une installation de chauffage (7) et à une chambre de brassage (12), ainsi qu'un dispositif doseur,
**caractérisé en ce que**
l'eau chauffée dans l'installation de chauffage (7) peut être utilisée pour chauffer un milieu dilatable dans le dispositif doseur (17, 18, 19), au moyen duquel un second composant peut être ajouté à la boisson brassée (15).

2. Dispositif conforme à la revendication 1,
**caractérisé en ce qu'**
il comporte un distributeur (8) au moyen duquel l'eau réchauffée peut sélectivement être transférée directement dans la chambre de brassage (12) et/ou dans le dispositif doseur (17, 18, 19).

3. Dispositif conforme à la revendication 1 ou 2,
**caractérisé en ce que**
le dispositif doseur comporte un boîtier (17) dans lequel est introduit le milieu dilatable et un piston (18) est guidé en coulissement dans ce boitier (17).

4. Dispositif conforme à l'une des revendications 1 à 3,
**caractérisé en ce que**
la pompe (5) permet de transférer de l'eau froide pour refroidir le dispositif doseur (17, 18, 19).

5. Dispositif conforme à l'une des revendications 1 à 4,
**caractérisé en ce que**
la boisson brassée peut être délivrée par une sortie (13) en aval de la chambre de chauffage (12) et le dispositif doseur (17, 18, 19) comporte une sortie propre pour délivrer le second composant.

6. Dispositif conforme à l'une des revendications 1 à 4,
**caractérisé en ce que**
le dispositif doseur (17, 18, 19) transfère le second composant dans la boisson brassée par une conduite en amont de la sortie pour délivrer cette boisson.

7. Dispositif conforme à l'une des revendications 1 à 6,
**caractérisé en ce que**
le milieu dilatable est formé par de la cire fusible.

8. Dispositif conforme à la revendication 7,
**caractérisé en ce que**
la cire fusible présente une température de fusion de 25°C à 80°C, de préférence de 30°C à 70°C.

9. Dispositif conforme à l'une des revendications 1 à 8,
**caractérisé en ce que**
le dispositif comporte plusieurs dispositifs doseurs (17, 18, 19) pour l'addition de différents composants, tels que du lait, du sucre, des matières édulcorantes ou similaires.

10. Dispositif conforme à l'une des revendications 1 à 9,
**caractérisé en ce qu'**
il comporte une commande permettant d'effectuer l'addition dosée du second composant en même temps que le processus de brassage.

11. Dispositif conforme à l'une des revendications 1 à 9,
**caractérisé en ce qu'**
il comporte une commande permettant d'effectuer l'addition dosée du second composant avec un décalage chronologique par rapport au processus de brassage.
